Europäisches Patentamt

European Patent Office

Office européen des brevets

(11) Publication number: **0 066 159**
**B1**

(12) # EUROPEAN PATENT SPECIFICATION

(45) Date of publication of patent specification: **03.09.86**

(51) Int. Cl.⁴: **H 02 P 8/00**

(21) Application number: **82104265.2**

(22) Date of filing: **15.05.82**

(54) Incremental motion motor control system.

(30) Priority: **21.05.81 US 265858**

(43) Date of publication of application:
**08.12.82 Bulletin 82/49**

(45) Publication of the grant of the patent:
**03.09.86 Bulletin 86/36**

(84) Designated Contracting States:
**DE FR IT NL**

(56) References cited:
**EP-A-0 035 258**
**AU-B- 510 076**
**DE-A-2 328 501**
**FR-A-2 203 210**

**IBM TECHNICAL DISCLOSURE BULLETIN, vol.
22, no. 12, May 1980, pages 5304-5306, New
York, USA J.A. BARNETT et al.: "Multimode
carriage control"**

**IBM TECHNICAL DISCLOSURE BULLETIN, vol.
17, no. 1, June 1974, pages 70-72, New York,
USA C.O. ROSS: "Stepper motor move time
VS. voltage compensation"**

(73) Proprietor: **DATAPRODUCTS CORPORATION
6200 Canoga Avenue
Woodland Hills California 91365 (US)**

(72) Inventor: **Ferris, Timothy A.
3635 Buffum Street
Simi Valley California (US)**
Inventor: **Fortescue, Stephen M.
10126 Andasol Avenue
Northridge California (US)**
Inventor: **Palombo, Gaston
28619 Bamfield Drive
Agoura California (US)**

(74) Representative: **Zenz, Joachim Klaus, Dipl.-Ing.
et al
ZENZ & HELBER Patentanwälte Am Ruhrstein 1
D-4300 Essen 1 (DE)**

Courier Press, Leamington Spa, England.

## Description

The invention relates to an incremental motion motor control system as defined by the preamble of claim 1. More particularly, this invention relates to a paper feed system for use with high speed line printers, i.e. those which print at a rate of greater than 1,000 lines per minute.

High speed line printers generally employ a type font carried on a band which moves horizontally across the paper being printed. A hammer bank impacts against the moving band to cause printing. In order to increase the throughput of the printer, either the paper feed time (the time to move the paper from one print line to the next) and/or the printing time (the time it takes to actually print a line) must be decreased. A reduction in print time is generally undesirable, since it also brings about a reduction in print quality. This is due to the fact that in order to reduce print time, the font speed must be increased, resulting in smearing of the characters. Therefor, it is desirable to provide as much time as is possible to accomplish actual printing. This means that paper feed time should be reduced to an absolute minimum.

Several methods have been utilized in the past to rapidly increment paper for a high speed line printer. One method involves the use of an open loop step motor, driven by any number of drive schemes, and incremented by a fixed timing sequence. This type of motor requires a torque margin to prevent a loss of steps, and therefore the full torque of the motor cannot be utilized. In addition, the motor is sensitive to load variations and is susceptible to resonances. Such a motor is very under-damped and will ring when positioning.

A second type of method uses a closed loop servo control system along with a DC brush type motor. A DC generator or an electronic tachometer is used for velocity feedback loops. The motors used in this type of system are relatively inefficient, and generally require undesirable forced air cooling for medium to high speed systems. Because of the motor's inefficiency, the system consumes a great deal of power.

US—A—4 228 396 discloses a brushless motor control system employing a velocity servo. In order to achieve the desired velocity, the commutation operation is varied by a velocity control circuit so that the velocity of the motor will follow the desired velocity profile.

DE—A—2 328 501 shows a stepper motor control system in which the motor is electronically commutated at the peaks of the torque curves to achieve a maximum accelerating or decelerating torque. However, this known system does not take into account the time constant of the stepper motor. In addition, the damping of such system is insufficient.

AU—B—510 076 discloses a control system of the type also employed by the invention wherein the stepping motor is driven both as a DC-motor and as a stepping motor.

In an incremental motion motor control system comprising a stepping motor which is driven as a DC-motor during initial acceleration and deceleration ("velocity" mode") and is switched to operate as a stepping motor only during final positioning ("position" mode) the invention provides for a control of the switching of the motor phases so that there is maximum torque utilization at all motor velocities.

This object is achieved by additional phase advance means whose output corresponds to an additional phase advance of between plus 90° and plus 180° at higher motor speeds for controlling the energisation of the phases of the motor as a function of the velocity of the motor to obtain maximum torque despite variations in motor velocity. A velocity profile generator including a microprocessor and a memory and digital-to-analog-converter creates a representation of the desired velocity. The desired velocity signal is compared with the actual velocity of the motor and an error signal is generated to drive the motor. The system includes a current limiting circuitry which limits the drive current at a level just below motor demagnetization. This enables the motor to accelerate and decelerate as rapidly as possible, thus increasing the speed.

A unique commutator and phase advance circuit is included to control the energization of the phases of the motor. The phases are energized symmetrically around the maximums of their torque curves, thus causing the stepper motor to effectively operate as a DC brushless motor. In addition, phase advance circuitry is included to account for the time constant of the motor and to given a maximum torque during acceleration and deceleration.

When the motor position approaches the final desired position, the control system switches the drive so that the motor functions as a stepping motor. Damping means for damping the motor when it is driven as a stepping motor provide a force which is proportional to the velocity of the motor whereby the positioning of the motor is further improved. Accordingly, the invention provides a very high efficiency, low-cost system adapted to drive the motor at very high speeds and damping the motor to stop at the desired position more rapidly than would otherwise be the case. Problems and limitations associated with open loop step motor systems (e.g., loss of motor steps, sensitivities to load variations, ringing and overshoot, resonances and low torque utilization) either have been eliminated entirely or greatly reduced. When used in the system of the present invention, the stepping motor is very efficient and is able to do much more work than equivalent volume motors of previous servo systems. In addition, no external cooling is required. Because of the motor's high efficiency, the cost of the paper feed system is substantially lower than that of the previous systems of equivalent performance.

Brief Description of the Drawings

The invention will be described with reference to the accompanying drawings in which:

FIGURE 1 is a block diagram of the control system of the invention;

FIGURE 2 is a graph of the velocity profile used with the invention;

FIGURE 3 is a schematic of the digital to analog converter of the velocity profile generator of FIGURE 1;

FIGURE 4 is a schematic diagram of a summing amplifier and the absolute value and current limit circuitry of FIGURE 1;

FIGURE 5 is a schematic diagram of the commutator circuitry of the control system;

FIGURE 6 is a schematic diagram of the squaring circuitry of FIGURE 1;

FIGURE 7 is a schematic diagram of automatic phase advance circuitry of the control system;

FIGURE 8 is a schematic diagram of an inverter to produce a velocity signal used by the phase advance circuitry;

FIGURE 9 is a schematic diagram of summing amplifiers used in the position mode to provide damping;

FIGURE 10 is a schematic diagram of the damping selector of FIGURE 1; and

FIGURE 11 is a schematic diagram of the tachometer used in the control system.

Detailed Description of the Drawings

The following description is of the best presently contemplated mode of carrying out the invention. This description is not to be taken in a limiting sense, but is made merely for the purpose of illustrating the general principles of the invention since the scope of the invention is best defined by the appended claims.

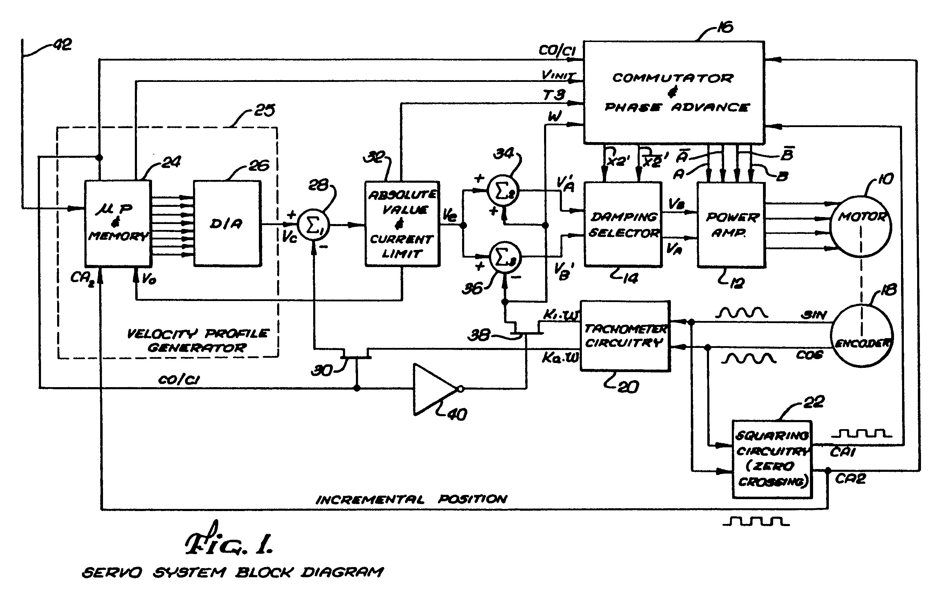

Referring to FIGURE 1, a stepping motor 10 is utilized to provide incremental motion for a paper feed system in a line printer. In the present embodiment of the invention, the motor 10 is a standard four phase, 1.8 degree step, hybrid permanent magnet stepping motor. One example of such a motor is the Superior Electric Model M093. This motor provides the necessary torque and is very efficient when used in the system of FIGURE 1.

The motor 10 is driven by a power amplifier 12, which is a pulse width modulated, high power transconductance amplifier. It receives as inputs two unipolar voltages from a damping selector 14 and converts each one to a proportional current for whichever of the two phases of the stepping motor are on at a given time. The phase energization of the power amplifier 12 is controlled by means of commutator and phase advance circuitry 16.

The position of the shaft of the motor 10 is detected by means of an encoder 18. In the present embodiment, the encoder is a 200 cycle per revolution optical encoder which provides separate sine and cosine outputs. The 200 cycle per revolution corresponds to one cycle per motor step, thus simplifying the use of the encoder information for switching the motor phases. The output of the encoder 18 is connected to a tachometer 20 and squaring circuitry 22. The tachometer processes the sine and cosine outputs and generates a bipolar output proportional to the velocity of the motor. The squaring circuitry 22 converts the encoder signals to pulse signals thereby providing an incremental position indication. The output of the squaring circuitry 22 is connected as an input to a microprocessor and memory 24, as well as to the commutator and phase advance circuitry 16. The digital output of the microprocessor and memory 24 is connected to a digital to analog (D to A) converter 26, which generates an analog signal proportional to the desired velocity of the motor.

The error between the desired velocity as represented by the output of the converter 26 and the actual velocity is determined by a summing amplifier 28, which receives a velocity feedback signal from the tachometer 20 through an FET switch 30. The error signal generated by the summing amplifier 28 is connected to absolute value and current limit circuitry 32, which provides an absolute value signal of the ouput of the amplifier 28, limited to a predetermined maximum current. In addition, a polarity signal T3 indicating the direction of the error is provided to the commutator circuitry 16. The absolute value current signal is provided to summing amplifiers 34 and 36, whose outputs are connected to drive the damping selector 14. The amplifiers 34 and 36 receive a velocity signal from the tachometer 20 via an FET switch 38. The switches 30 and 38 are controlled by a logic output of the microprocessor and memory section 24. An inverter 40 causes the switch 30 to be opened when switch 38 is closed and vice versa.

The configuration of FIGURE 1 is such that the motor 10 is driven in one of two modes, namely a velocity mode or a position mode. In the velocity mode, the velocity profile generator 25 provides a velocity command which is used to control the energization of the motor until it reaches a location very close to the desired position. In this mode, the motor is effectively driven as a brushless DC motor. This is accomplished by switching the drive current to the motor phases symmetrically around the motor's peak holding torque. When the motor comes close to the desired position (within 1/4 motor step in the present embodiment), the system is switched to the position mode, in which the motor is driven as a stepping motor to cause it to be held at its desired position. It should be noted that in the position mode, the motor does not actually move through a number of steps. Rather, the motor is energized in a normal step motor fashion to cause it to move a portion of a step until it reaches a null position.

Initially, the system will be in the position mode and the motor velocity and position will be zero. Upon receipt of a paper feed command (e.g., a command which instructs the system to step the paper one line, which generally corresponds to either six or eight motor steps) on line 42 the microprocessor forces lines CO/C1 and Vinit low. This closes the FET switch 30 and opens the FET switch 38, which puts the system in the velocity mode. The microprocessor starts incrementing the D to A converter 26 as fast as possible. The analog voltage output of the D to A converter 26 will thus increase rapidly. Since the velocity of the motor will initially lag behind the desired velocity as indicated by the output of the D to A converter 26, a relatively large error signal will be generated by the summing amplifier 28. This error signal is processed by the absolute value and current limiting circuitry 32, and signals representing the magnitude of the error are coupled to the power amplifier 12 through the summing amplifiers 34 and 36 and the damping selector 14. When the system is in the velocity mode, the amplifiers 34 and 36 and the selector 14 simply provide straight connections between the circuitry 32 and the power amplifier 12, since the switch 38 is open.

By forcing CO/C1 low, the commutator and phase advance circuitry 16 is controlled so that the motor will accelerate as long as there is an error between the velocity command and response. As the D to A output increments faster than the motor responds, the error voltage will be limited by the limiter 32 quickly. The limiting is detected by the processor on line Vo, and the D to A output is held constant until the response "catches up" and the error voltage falls below the limit level. At this point the microprocessor increments the D to A output again, and the process repeats. The limit is chosen at a value slightly lower than the demagnetization level of the motor so that the motor is accelerated at the maximum rate possible.

This method of control in the velocity mode allows the stepping motor to accelerate at its maximum potential while maintaining control. The motor velocity is directly dependent upon the velocity command.

When the velocity command reaches a predetermined level, called the terminal velocity, the microprocessor will stop incrementing the D to A, putting the system into a constant velocity mode. Input CA2 is polled looking for the pulse indicaing the start of deceleration (i.e., a predetermined point where deceleration should begin), and when it is encountered the microprocessor starts to decrement the D to A output as rapidly as possible. When the error voltage limits, the microprocessor will stop decrementing the D to A output until the velocity response again "catches up". As soon as the error voltage drops below the limit, the microprocessor will start decrementing the D to A output again, and the process repeats.

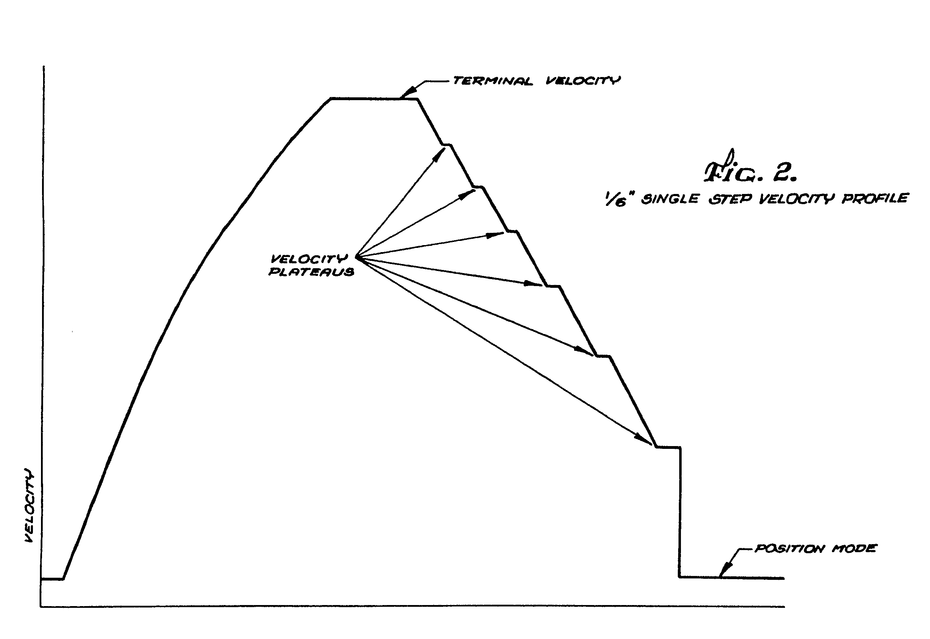

The velocity profile generator 25 establishes a velocity profile as shown in FIGURE 2. Minimum step time is obtained by using an essentially triangular velocity profile. In addition, for a given step time, the triangular velocity profile has the lowest acceleration. On the deceleration side, the profile is a staircase, and includes a number of velocity "plateaus". When the D to A output reaches one of the velocity plateaus, the microprocessor will hold that level until an encoder transition at CA2 occurs. At this point the microprocessor repeats the deceleration staircase until the final encoder transition is encountered, at which time the D to A output is set to a fixed level for the position mode gain, and CO/C1 and Vinit are forced high, putting the system into position mode.

The velocity plateaus create a staircase effect when decelerating. The purpose of these plateaus is to provide velocity-position checkpoints so that the velocity error when entering the position mode is small. This means motor overshoot and settling time are insignificant and can be ignored. If these plateaus are needed, the greater the number used, the shorter the step time will be. Therefore, it is preferable in the present embodiment that the number of plateaus is seven, equal to the number of encoder transitions during deceleration.

The microprocessor is preferably provided with an appropriate control program. The control provided by the microprocessor could alternatively be accomplished with TTL circuitry, although such an implementation would be more expensive.

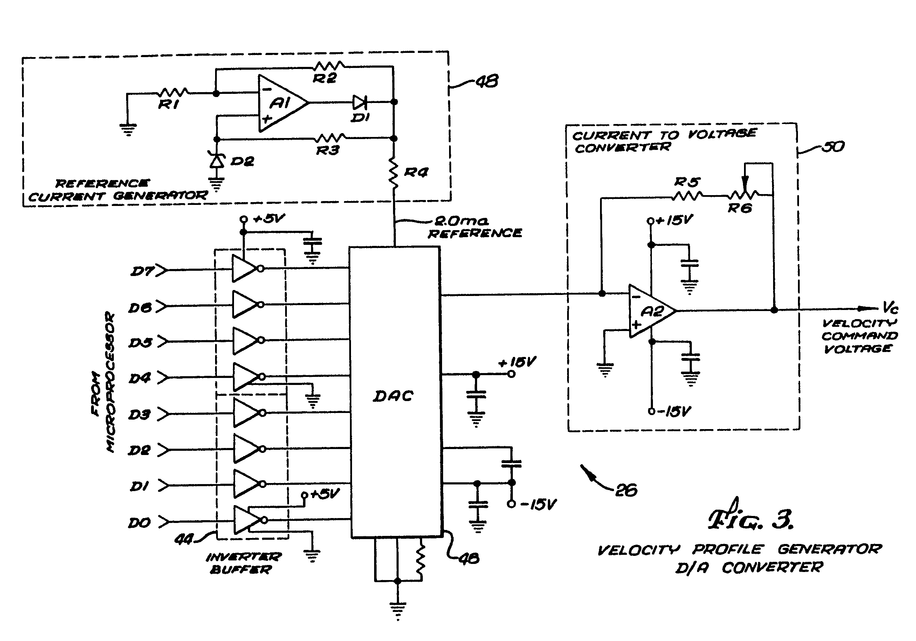

The D to A converter 26 is shown in greater detail in FIGURE 3. The converter includes a plurality of inverter buffers 44 which receive inputs from the microprocessor, a digital to analog converter 46, a reference current generator 48 and a current to voltage converter 50. The reference current generator 48 provides a highly accurate 2 ma reference for the converter 46, and is comprised of an amplifier A1, resistors R1—R4 and diodes D1 and D2. The converter 50 converts the current output of the digital to analog converter 46 to a voltage output Vc. The converter 50 includes an amplifier A2 and resistors R5 and R6. R6 is a potentiometer which is used to adjust the servo system for proper step response.

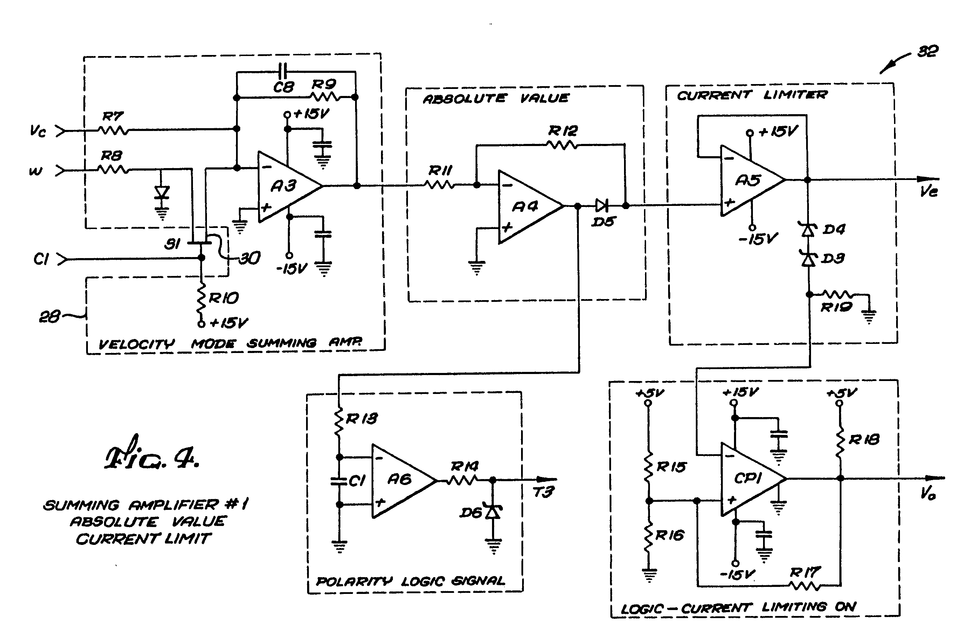

The circuitry of the summing amplifier 28 and absolute value and current limiter 32 is shown in FIGURE 4. Elements C8, R7—R10 and A3 make up the summing amplifier 28. The switch 30 opens and closes the velocity loop. The summing amp circuitry is simply an op amp used in the inverting mode. Resistors R7—R9 are selected to set the proper loop gain. C8 creastes an open loop pole at 1200 Hz. The summing amp subtracts the velocity signal from the output Vc of the velocity profile generator and provides a difference signal at its output.

The absolute value circuitry includes an amplifier A4, resistors R11 and R12 and a diode D5. This circuit gives an output equal to the absolute value of the error signal. The magnitude of this signal is limited by a current limiter including amplifier A5, resistor R19 and diodes D3 and D4. Whenever the error exceeds a limit set by D3, D4 and R19, the output of A5 is clamped to a predetermined level. When this occurs, a logic signal $V_0$ is generated by a circuit including comparator CP1 and resistors R15—R18. The current limit is chosen to be at a level just below motor demagnetization. A signal T3 is generated by circuitry including amplifier A6, resistors R13 and R14, capacitor C1 and a diode D6 to indicate the polarity of the error signal.

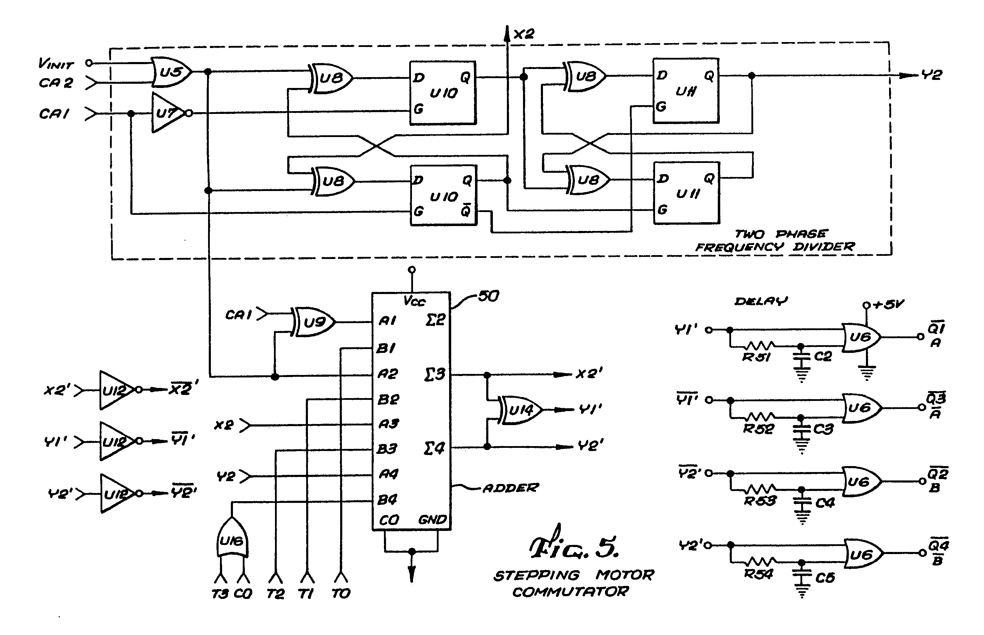

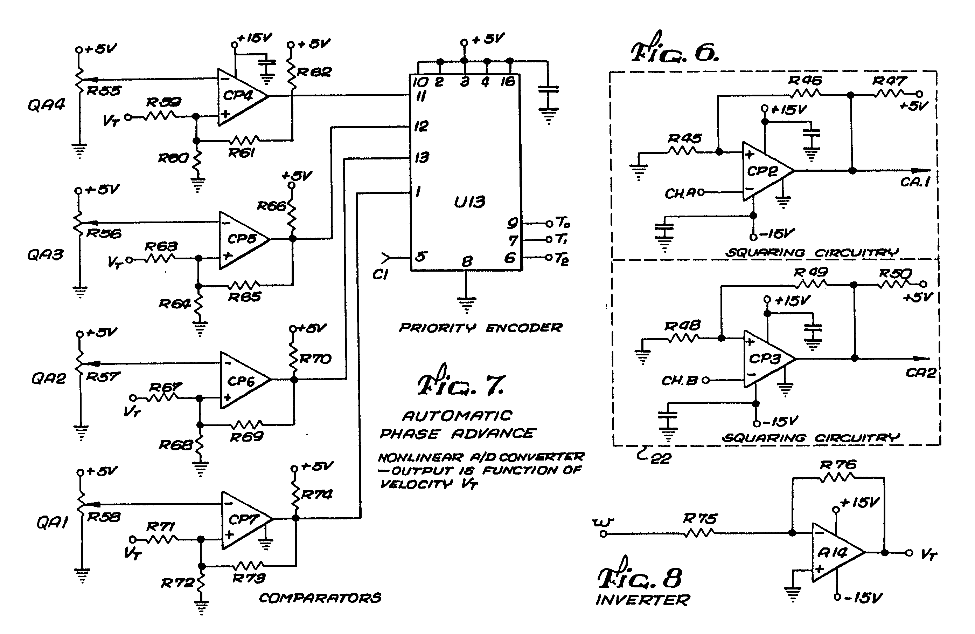

A portion of the commutating and phase advance circuitry 16 and the squaring circuitry 22 is shown in FIGURES 5 and 6. The commutating circuitry provides control signals A, $\bar{A}$, B and $\bar{B}$ which select which phases of the motor will be energized. In addition, phase advance is provided to insure maximum accelerating and decelerating torque and to compensate for the time constant of the motor.

The squaring circuitry 22 includes comparators CP2 and CP3 and resistors R45—R50. The outputs CA1 and CA2 of the squaring circuitry are fed to a two phase frequency divider composed of gates U8, gated latches U10 and U11, a gate U5 and an inverter U7. The frequency divider provides outputs X2 and Y2 which are connected as inputs to an adder 50. Signals CA1 and CA2 from the squaring circuitry are also coupled to inputs of the adder, with the signal CA1 being coupled via gate U9 and CA2 coupled via gate U5.

The four inputs A1—A4 to the adder 50 make up a four bit number which represents motor position within one motor phase cycle. The energization of the motor phases is controlled as a function of motor position. The adder provides output signals X2', Y1' (through a gate U14) and Y2'. These signal are inverted by inverters U12. The inverted signals are used along with Y1' to generate the control signals A, $\bar{A}$, B and $\bar{B}$, which are delivered to the power amplifier 12. Delay circuitry including OR gates U6, resistors R51—R54 and capacitors C2—C5 creates a short delay between the rising edge of one signal and the falling edge of its complement so that the power amplifier output transistors do not cause coincident energization of complementary phases of the motor.

An additional four bit number provided at inputs B1—B4 of the adder 50 is employed to create a phase advance or retard in the motor timing. This phase shift is provided to insure maximum torque during acceleration and deceleration. During acceleration, a positive 90° phase shift is added to provide maximum torque. Maximum deceleration torque is provided by a negative 90° (or positive 270°) phase shift. The direction of the phase shift compensation is controlled by the polarity signal T3 from the absolute value circuit 32, which indicates the direction of error of the velocity signal The signal T3 is connected to the adder through a gate U16. When T3 goes high, indicating that the velocity is greater than the desired velocity, the input B4 goes high, giving an additional 180° positive phase shift. This provides maximum deceleration torque.

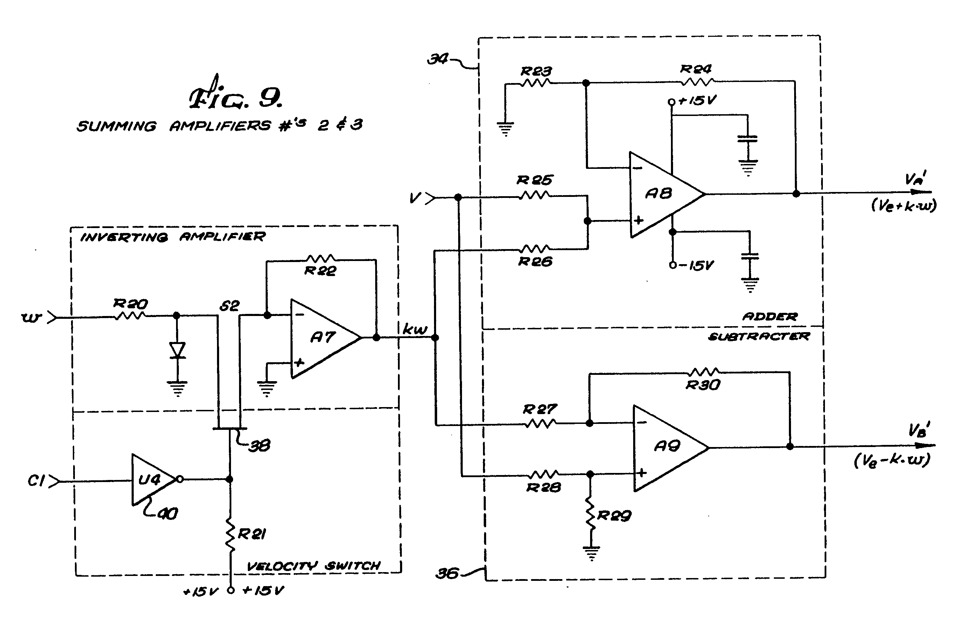

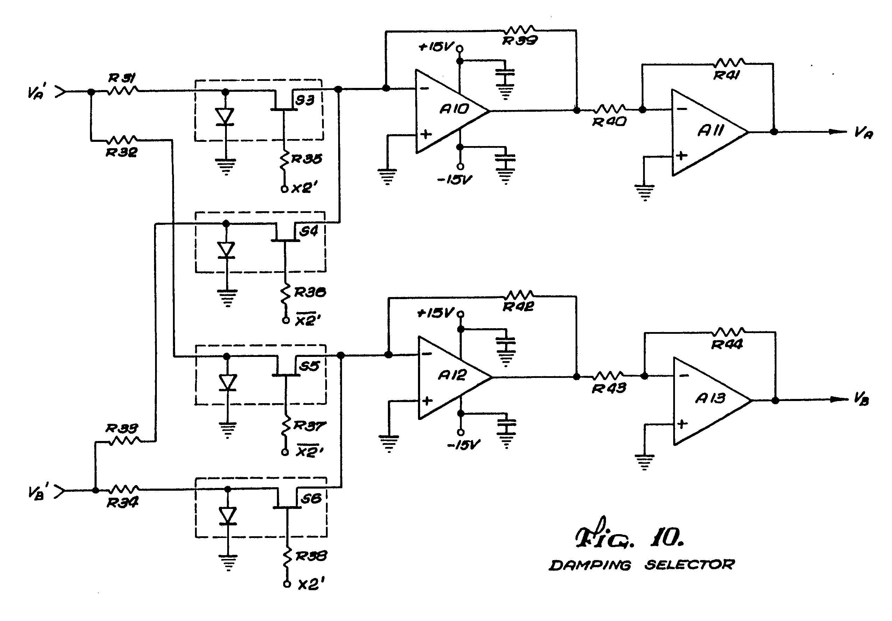

As the velocity of the motor increases, additional phase advance is required to maintain maximum torque due to the motor time constant. The phase advance circuit shown in FIGURE 7 generates outputs T0, T1 and T2 to provide this necessary phase advance. Basically, this circuit is a non linear analog to digital converter whose output is a function of motor velocity. The outputs of comparators CP4—CP7 are normally low, but go high when the motor velocity signal $V_t$ exceeds the value set by potentiometers R55—R58. A priority encoder U13 outputs one of six three bit words corresponding to an electrical phase shift of the motor timings. When input C1 is high (during the position mode) the outputs are all high, corresponding to a phase of 0°. When C1 is low, the inputs from the comparators are enabled, and the output of the priority encoder will be a number corresponding to a phase shift of between plus 90° and plus 180° in 22.5° increments. Op-amp A14 and resistors R75 and R76 (FIGURE 8) invert the velocity signal from the tachometer circuitry 20 for use by the comparators.

Thus, the commutator and phase advance circuitry of FIGURES 5 and 7 controls the connection of the error signals to the proper phases of the motor. The circuitry provides either a positive 90° or negative 90° (positive 270°) phase shift to provide maximum accelerating or decelerating torque. In addition, because of the motor electrical time constant, additional phase advance is added at higher speeds to maintain maximum torque.

The microprocessor 24 monitors the position of the motor by counting transitions at CA2. When the motor has reached a predetermined position, the microprocessor causes the signal CO/C1 to go high, which causes the system to switch to the position mode. In this mode, the switch 30 is opened and the switch 38 is closed. In addition, the signal CO/C1 puts the phase shift at zero.

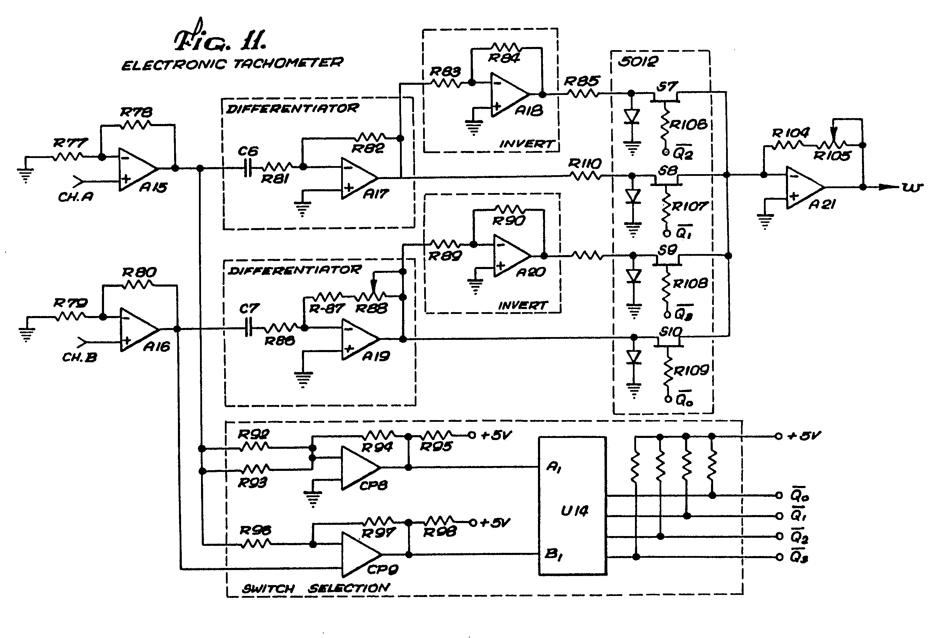

When the system switches to the position mode, the velocity profile generator 25 provides a constant voltage signal for driving the motor in a stepping mode. The velocity signal from the velocity profile generator is passed through the first summing amplifier 28 to the second and third summing amplifiers 34 and 36. The amplifier 34 sums the constant voltage from the velocity profile generator (passed through the circuit 32 as Ve) with the velocity output of the tachometer circuitry 20, and the summing amplifier 36 sums the constant voltage with the inverse of velocity. As shown in FIGURE 9, switch 38, inverter 40 and resistor R21 form a switch to close the position velocity loop when in the position mode. An inverting amplifier including op amp A7 and resistors R20 and R22 give the velocity signal ω the proper polarity and gain for critical damping. The summing amplifier 34 includes an amplifier A8 and resistors R23—R26. The summing amplifier 36 includes an amplifier A9 and resistors R27—R30. The summing amplifiers thus provide signals Va' which equals Ve + Kω and Vb' which equals Ve − Kω. These signals are then provided to the damping selector 14.

The damping selector 14 (FIGURE 10) routes the signals from the summing amplifiers 34 and 36 to the proper phases in the power amplifier 12. The damping selector is shown in detail in FIGURE 10. The outputs Va' and Vb' are coupled to switches S3—S6 for proper phase pair selection. These switches are controlled by the signals X2' and $\overline{X2}'$ from the commutator. Switches S3 and S4 and resistors R35 and R36 are used to select either input Va' or Vb' to be sent to the output Va. Switches S5 and S6 and resistors R32 and R34 are used to select either input Vb' or Va' to be sent to the output Vb. Op amps A10, A11 and resistors R31 or R33 form two inverters in series to give no polarity change. Op amps A12, A13 and resistors R32 or R34 and R42—R44 perform a similar function. Resistors R35—R38 eliminate FET switching transients from the output. The outputs Va and Vb are coupled to the power amplifier 12 to drive the motor.

The damping selector thus provides current signals which are a function of velocity. As the motor comes close to the null position (i.e., the desired position) it has a natural tendency to ring. In order to overcome this tendency, a velocity signal is added in one phase, and subtracted in the other to increase and decrease the drive currents as required. That is, as the motor initially approaches the null point with a positive velocity, the null point is effectively shifted proportional to velocity in such a manner that the motor velocity decreases smoothly to zero at the null point, the null position. The provision of the velocity feedback thus tends to cause the motor to stop at the null position more rapidly than would otherwise be the case.

The tachometer 20 is shown in detail in FIGURE 11. This is an electronic tachometer which uses the slope magnitude sampling method to obtain velocity signals. Op amps A15 and A16 along with resistors R77—80 amplify the encoder outputs to the desired level. Op amps A17 and A19 along with the resistors R81, R82, R86, R87 and R88 and capacitors C6 and C7 form differentiators whose output amplitude is proportional to the input slope, which is in turn proportional to velocity. A18, A20, R83, R84, R89 and R90 invert the differentiator outputs so there is always either a positive signal at one of the four inputs to the switches S7—S10, or a negative signal at one of the four switch inputs. Comparators CP8 and CP9, encoder U14 and resistors R92—R98 select which switch to turn on at anytime so that the output is a continuous positive or negative signal, depending on the direction of motor rotation. Op amp A21 amplifies the switched signal for the final tachometer output. Potentiometer R105 adjusts the tachometer gain. Potentiometer R88 is used to equalize the two differentiated signals.

In summary, the present invention provides a motor control system employing a stepping motor which is effectively driven as a DC brushless motor during initial acceleration and deceleration and is switched to operate as a stepping motor only during final positioning. When in the velocity mode, closed loop commutation is used to control the switching of the phases so that there is maximum torque utilization. Furthermore, the phase switching is advanced electronically as a function of velocity so that torque is optimized at all motor velocities. A closed loop control system is utilized when in the velocity mode. A microprocessor controls the step motor operation and the closed loop approach enables the motor to step at its full potential while being controlled. Near the end of the step from one line to the next, the system is switched so as to cause the motor to function as a step motor. Velocity dependent damping is added to further improve the positioning of the motor.

Although the invention has been described in terms of specific circuitry, it should be appreciated that many modifications and variations will occur to those skilled in the art. Therefore, the scope of the invention should be determined from the appended claims rather than the foregoing description.

**Claims**

1. An incremental motion motor control system comprising a stepping motor (10) which is driven (a) as a DC motor from initial energization of the motor until the motor reaches a position near its desired position and (b) as a stepping motor to bring the motor to its final desired position with velocity command signal generating means (25) representing the desired velocity of the motor, feedback means (18, 20, 22, 30, 38, 40) for providing feedback signals representing the position and the velocity of the motor, error signalling means (28 ... 36) for providing an error signal representing the difference between the velocity command signal and the velocity feedback signal, commutation means (16) for controlling the energisation of the phases of the motor, the commutation means including phase advance means for controlling the energisation of the phases of the motor as a function of the position of the motor, the system characterized by:

additional phase advance means (16) whose output corresponds to an additional phase advance of between plus 90° and plus 180° at higher motor speeds for controlling the energisation of the phases of the motor as a function of the velocity of the motor to obtain maximum torque despite variations in motor velocity.

2. Control system according to claim 1 characterized in that the velocity means includes tachometer circuitry (20) connected to the output of an encoder (18) said encoder determining the position of the stepping motor (10), and in that the tachometer circuitry processes the position output of the encoder to obtain a velocity output.

3. Control system according to claim 1 or 2 characterized by damping means (14, 34, 36) for damping the motor (10) when it is driven as a stepping motor.

4. Control system according to claim 3 characterized in that the damping means (14) provides a force which is proportional to the velocity of the motor (10).

5. Control system according to claim 4 including means (28) for providing first and second drive signals for the motor (10), wherein the damping means includes means (34, 36) for adding a velocity proportional signal (kw) to the first drive signal and subtracting a velocity proportional signal (kw) from the second drive signal, wherein said modified drive signals ($V_A$, $V_B$) are used to drive the motor.

6. Control system according to one of claims 1 to 5, characterized in that said error means (28 ... 36) includes a limiting circuitry (32) for limiting the magnitude of the error signal to a value just below that which causes motor demagnetization to occur.

7. Control system according to one of claims 1 to 6 characterized in that said control system is part of a high accuracy paper feed system in a high speed printer.

**Patentansprüche**

1. Steuersystem für einen Motor mit inkrementaler Bewegung, aufweisend einen Schrittmotor (10), der betrieben wird als (a) Gleichstrommotor ab Beginn der Motorerregung bis zum Erreichen einer Stellung nahe seiner gewünschten (Soll-)Stellung und (b) als Schrittmotor zum Erreichen der endgültigen Sollposition, ferner Mittel (25) zur Erzeugung eines Geschwindigkeitsstellsignal, das die Sollgeschwindigkeit des Motors darstellt, Rückkopplungsmittel (18, 20, 22, 30, 38, 40) zur Erzeugung von die Position und die Geschwindigkeit des Motors darstellenden Rückkopplungssignalen, Fehler-Signalgabemittel (28 ... 36) zur Schaffung eines die Differenz zwischen dem Geschwindigkeits-Stellsignal und dem Geschwindigkeits-Rückkopplungssignal darstellenden Fehlersignals und Kommutatormittel (16) zur Steuerung der Erregung der Phasen des Motors, wobei die Kommutatormittel Phasenverschiebmittel zur Steuerung der Erregung der Phasen des Motors als Funktion der Stellung de Motors aufweisen, gekennzeichnet durch:

zusätzliche Phasenverschiebemittel (16), deren Ausgangssignal einer zusätzlichen Phasenverschiebung zwischen plus 90° und plus 180° bei höheren Motorgeschwindigkeiten entspricht und die Erregung der Phasen des Motors als Funktion der Motorgeschwindigkeit zur Gewinnung eines maximalen Drehmomentes trotz Änderungen der Motorgeschwindigkeit steuert.

2. Steuersystem nach Anspruch 1, dadurch gekennzeichnet, daß die Geschwindigkeitsmittel eine mit dem Ausgang eines Codierers (18) verbundene Tachometerschaltung (20) aufweisen, wobei der Codierer die Position des Schrittmotors (10) bestimmt, und daß die Tachometerschaltung das Positions-Ausgangssignal des Codierers zur Gewinnung eines Geschwindigkeitsausgangssignals verarbeitet.

3. Steuersystem nach Anspruch 1 oder 2, gekennzeichnet durch Dämpfungsmittel (14, 34, 36) zur Dämpfung des Motors (10) bei dessen Betreiben als Schrittmotor.

4. Steuersystem nach Anspruch 3, dadurch gekennzeichnet, daß die Dämpfungsmittel (14) eine Kraft entwickeln, die der Geschwindigkeit des Motors (10) proportional ist.

5. Steuersystem nach Anspruch 4, gekennzeichnet durch Mittel (28) zur Erzeugung erster und zweiter Treibersignale für den Motor (10), wobei die Dämpfungsmittel Mittel (34, 36) zum Addieren eines geschwindigkeitsproportionalen Signals (kw) zu dem ersten Treibersignal und zum Substrahlieren eines geschwindigkeitsproportionalen Signals (kw) von dem zweiten Treibersignal aufweisen, und wobei die modifizierten Treibersignale ($V_A$, $V_B$) zum Antreiben des Motors verwendet werden.

6. Steuersystem nach einem der Ansprüche 1 bis 5, dadurch gekennzeichnet, daß die Fehler Signalgabemittel (28 ... 36) eine Begrenzungsschaltung (32) zum Begrenzen der Stärke des Fehlersignals auf einen Wert gerade unterhalb des den Motor entmagnetisierenden Wertes aufweisen.

7. Steuersystem nach dem einem der Ansprüche 1 bis 6, dadurch gekennzeichnet, daß das Steuersystem Bestandteil eines hochgenauen Papierfördersystems in einem Hochgeschwindigkeitsdrucker ist.

**Revendications**

1. Système de commande de moteur à mouvement incrémental comprenant un moteur pas à pas (10) qui est entraîné (a) comme un moteur à courant continu à partir d'une excitation initiale du moteur jusqu'à ce que le moteur atteigne une position proche de sa position désirée et (b) comme un moteur pas à pas pour amener le moteur dans sa position finale désirée avec un moyen (25) de génération de signal de commande de vitesse représentant la vitesse désirée du moteur, des moyens de réaction (18, 20, 22, 30, 38, 40) pour produire des signaux de réaction représentant la position et la vitesse du moteur, des moyens de signalisation d'erreur (28 ... 36) pour produire un signal d'erreur représentant la différence entre le signal de commande de vitesse et le signal de réaction de vitesse, un moyen de commutation (16) pour commander l'excitation des phases du moteur, le moyen de commutation comprenant un moyen d'avance de phase pour commander l'excitation des phases du moteur en fonction de la position du moteur, le système étant caractérisé par:

— un moyen d'avance de phase additionnelle (16) dont le signal de sortie correspond à une avance de phase additionnelle comprise entre plus 90° et plus 180° pour des vitesses élevées du moteur afin de commander l'excitation des phases du moteur en fonction de la vitesse du moteur pour obtenir un couple maximal en dépit de variations de vitesse du moteur.

2. Système de commande selon la revendication 1, caractérisé par le fait que le moyen sensible à la vitesse comprend un circuit tachymétrique (20) relié à la sortie d'un codeur (18), ledit codeur déterminant la position du moteur pas à pas (10), et que le circuit tachymétrique traite le signal de sortie de position du codeur pour obtenir un signal de sortie de vitesse.

3. Système de commande selon la revendication 1 ou 2, caractérisé par un moyen d'amortissement (14, 34, 36) pour assurer l'amortissement du moteur (10) lorsqu'il est entraîné comme un moteur pas à pas.

4. Système de commande selon la revendication 3, caractérisé par le fait que le moyen d'amortissement (14) produit une force qui est proportionnelle à la vitesse du moteur (10).

5. Système de commande selon la revendication 4, comportant un moyen (28) pour produire un premier et un second signal d'entraînement pour le moteur (10), caractérisé par le fait que le moyen d'amortissement comprend des moyens (34, 36) pour additionner un signal proportionnel à la vitesse (kw) au premier signal d'entraînement et pour soustraire un signal proportionnel à la vitesse (kw) du second signal d'entraînement et que lesdits signaux d'entraînement modifiés ($V_A$, $V_B$) sont utilisés pour entraîner le moteur.

6. Système de commande selon l'une des revendications 1 à 5, caractérisé par le fait que ledit moyen de signalisation d'erreur (28 ... 36) comprend un circuit limiteur (32) pour limiter la grandeur du signal d'erreur à une valeur juste inférieure à celle qui produit une démagnétisation du moteur.

7. Système de commande selon l'une des revendications 1 à 6, caractérisé par le fait que ledit système de commande fait partie d'un système d'avancement de papier de haute précision dans une imprimante rapide.

8

FIG. I.

SERVO SYSTEM BLOCK DIAGRAM

0 066 159

TERMINAL VELOCITY

FIG. 2.
1/6" SINGLE STEP VELOCITY PROFILE

VELOCITY PLATEAUS

POSITION MODE

VELOCITY

0 066 159

Fig. 3.

VELOCITY PROFILE GENERATOR
D/A CONVERTER

0 066 159

Fig. 4.

SUMMING AMPLIFIER #1
ABSOLUTE VALUE
CURRENT LIMIT

0 066 159

TWO PHASE
FREQUENCY DIVIDER

DELAY

Fig. 5.

STEPPING MOTOR
COMMUTATOR

0 066 159

**FIG. 6.**

SQUARING CIRCUITRY

SQUARING CIRCUITRY

**FIG. 7.**

AUTOMATIC
PHASE ADVANCE

NONLINEAR A/D CONVERTER
—OUTPUT IS FUNCTION OF
VELOCITY $V_T$

PRIORITY ENCODER

COMPARATORS

**FIG. 8**
INVERTER

0 066 159

Fig. 9.
SUMMING AMPLIFIERS #'s 2 & 3

INVERTING AMPLIFIER

VELOCITY SWITCH

ADDER

SUBTRACTER

$V_A'$
$(V_e + k \cdot w)$

$V_B'$
$(V_e - k \cdot w)$

0 066 159

FIG. 10.
DAMPING SELECTOR

Fig. 11.
ELECTRONIC TACHOMETER

0 066 159